# EUROPEAN PATENT APPLICATION

(11) **EP 4 582 190 A1**
(43) Date of publication of application: **09.07.2025**
(21) Application number: 22956738.3
(22) Date of filing: 29.08.2022
(51) Int. Cl.: B05D 3/02, B05D 3/04

(54) **DRYING APPARATUS AND ELECTRODE SHEET MANUFACTURING DEVICE**

(71) Applicant: Contemporary Amperex Technology Co., Limited, Ningde, Fujian 352100 (CN)
(72) Inventor: YU, Linzhen, Ningde, Fujian 352100 (CN); LU, Lei, Ningde, Fujian 352100 (CN); WANG, Zheng, Ningde, Fujian 352100 (CN); LI, Shisong, Ningde, Fujian 352100 (CN); ZHANG, Shengwu, Ningde, Fujian 352100 (CN); LI, Keqiang, Ningde, Fujian 352100 (CN)
(74) Representative: Ran, Handong
(86) International application number: PCT/CN2022/115557
(87) International publication number: WO 2024/044902

(57) **Abstract**

A drying apparatus, comprising an oven (100) and control units (200), wherein the oven is formed by assembling a plurality of oven modules (10), each oven module comprises an oven body (11) and an air blowing apparatus (12), the air blowing apparatus is at least partially arranged in the oven body, and the air blowing apparatus is used for blowing air onto a material strip in the oven body. The plurality of control units correspond to the plurality of oven modules on a one-to-one basis, and each control unit is used for controlling an air output parameter of an air blowing apparatus of a corresponding oven module. Further disclosed is an electrode sheet manufacturing device. By means of the apparatus, the quality of a battery can be improved while reducing the cost.

## Description

### TECHNICAL FIELD

The present application relates to the technical field of batteries, and specifically relates to an oven drying apparatus and an electrode plate manufacturing device.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor regarding their development.

In a battery manufacturing process, how to improve battery quality while reducing costs is a technical problem to be urgently solved in the battery technology.

### SUMMARY OF THE INVENTION

The present application provides an oven drying apparatus and an electrode plate manufacturing device, which can improve the battery quality while reducing costs.

The present application is implemented through the following technical solutions:
In a first aspect, the present application provides an oven drying apparatus for oven drying a material strip, comprising: an oven formed by splicing a plurality of oven modules, wherein each of the oven modules comprises an oven chamber and a blowing apparatus, the blowing apparatus is at least partially arranged inside the oven chamber, and the blowing apparatus is configured to blow air towards the material strip inside the oven chamber; and a plurality of control units each corresponding to one of the plurality of oven modules, wherein each of the control units is configured to control an outlet air parameter of the blowing apparatus of the corresponding oven module.

In the above solutions, the oven in the oven drying apparatus is formed by splicing the plurality of oven modules, an outlet air parameter of each of the oven modules is controlled by a respective corresponding control unit respectively, so that when the material strip passes through different oven modules, different oven drying effects on the material strip can be achieved for a current state of the material strip, thereby ensuring that the electrode plate is thoroughly dried and will not crack due to over-drying. Compared with an existing integrated oven, on the one hand, the oven drying apparatus provided in this solution has high processing efficiency and short assembly time because the oven is formed by splicing the plurality of oven modules, thereby effectively reducing the manufacturing costs of the oven drying apparatus, that is, reducing the costs; and on the other hand, because each oven module is independently controlled by a corresponding control unit, when the material strip passes through different oven modules, different oven drying effects can be obtained to ensure the oven drying quality. When the material strip is the electrode plate, the battery with the electrode plate can have high quality.

According to some embodiments of the present application, the outlet air parameter comprises an outlet air temperature and/or an outlet air volume.

In the above solutions, the blowing apparatus can be controlled by the corresponding control unit to adjust the outlet air volume, or the outlet air temperature, or the outlet air volume and the outlet air temperature of air provided to the material strip, thus providing different oven drying effects on the material strip in different states, ensuring that the material strip is oven dried appropriately, and preventing the material strip from cracking due to over-oven drying.

According to some embodiments of the present application, the blowing apparatus comprises a fan, a compartment, and an air nozzle, wherein the fan is communicated with the compartment to supply air into the compartment, the air nozzle is installed on the compartment, and the air nozzle is configured to blow air towards the material strip.

In the above solutions, the blowing apparatus has a simple structure, and is convenient for manufacturing. When the material strip in the oven chamber is oven dried, the fan works to supply gas into the compartment, and finally the gas is discharged through the air nozzle and acts upon the material strip, thus oven drying the material strip.

According to some embodiments of the present application, the blowing apparatus further comprises a heating assembly and a temperature control unit, the heating assembly is arranged in an air supply path between the fan and the compartment, the heating assembly is configured to heat air provided to the compartment by the fan, the temperature control unit is configured to control a heating temperature of the heating assembly, and the temperature control unit is electrically connected to the control unit.

In the above solutions, by arranging the heating assembly on the air supply path between the fan and the compartment, the gas supplied into the compartment can be heated, so that the heated gas can uniformly act upon a surface of the material strip through the air nozzle, thus oven drying the material strip. By arranging a temperature unit, the control unit can control the temperature unit to control the heating power of the heating assembly, thereby effectively controlling the outlet air temperature.

According to some embodiments of the present application, the blowing apparatus further comprises an air inlet pipe, the fan is connected to the compartment through the air inlet pipe, and the heating assembly is arranged inside the air inlet pipe.

In the above solutions, by arranging the air inlet pipe to connect the fan and the compartment, the fan and the compartment are assembled; and by arranging the heating assembly inside the air inlet pipe, the gas supplied into the compartment by the fan can be effectively heated to ensure the oven drying effect on the material strip.

According to some embodiments of the present application, the compartment and the air nozzle are arranged inside the oven chamber, and the fan is arranged outside the oven chamber.

In the above solutions, the fan is arranged outside the oven chamber to suck outside air into the compartment, which can ensure gas circulation inside the oven chamber, effectively discharge a harmful gas generated from oven drying inside the oven chamber, avoid accumulation of the harmful gas, and ensure the production safety.

According to some embodiments of the present application, the blowing apparatus further comprises a frequency converter connected to the fan and electrically connected to the control unit.

In the above solutions, by arranging the frequency converter, the control unit can control a rotation frequency of a motor in the fan, thereby controlling the outlet air volume.

According to some embodiments of the present application, the oven module further comprises a temperature sensor arranged inside the compartment for detecting the temperature inside the compartment.

In the above solutions, by arranging the temperature sensor in the compartment, the temperature of the air acting upon the material strip can be detected in a timely manner, and then the outlet air parameter of the blowing apparatus can be adjusted based on requirements, to prevent the material strip from cracking and damaging due to over-drying, and ensure that the material strip is oven dried appropriately.

According to some embodiments of the present application, the oven module further comprises a bypass roller arranged inside the oven chamber for transporting the material strip.

In the above solutions, by arranging the bypass roller, the material strip can move smoothly in the oven chamber to transport the material strip.

According to some embodiments of the present application, each of the oven modules comprises at least one bypass roller opposite to the air nozzle, and a distance between the bypass roller opposite to the air nozzle and the air nozzle is L, satisfying 10 mm≤L≤30 mm.

In the above solutions, the bypass roller is used to support the material strip to realize belt conveying of the material strip. Therefore, a gap between the bypass roller opposite to the air nozzle and the air nozzle can be regarded as a gap between the material strip and the air nozzle. The smaller the gap is, the closer the material strip is to the air nozzle, and the greater the effect of air is. Vice versa, the larger the gap is, the further the material strip is from the air nozzle, and the smaller the effect of air is. However, the closer the material strip is to the air nozzle, the greater the risk of damaging and cracking the material strip due to airflow impact is, while the farther the material strip is from the air nozzle, the lower the oven drying efficiency is. Therefore, in some embodiments of this solution, the range of the distance L between the bypass roller opposite to the air nozzle and the air nozzle is defined to satisfy 10 mm≤L≤30 mm, which, on the one hand, ensures the oven drying efficiency of the material strip, and on the other hand, ensures to reduce the risk of damaging the material strip due to airflow impact.

According to some embodiments of the present application, a wall of the oven chamber is formed with an air return port.

In the above solutions, the air return port is formed on the wall of the oven chamber, to circulate the gas inside and outside the oven chamber, which can, in a first aspect, reduce the risk of damaging the material strip caused by heat accumulation inside the oven chamber; can, in a second aspect, balance the pressure inside and outside the oven chamber to reduce the risk of damaging the oven chamber; and can, in a third aspect, reduce the risk of explosion caused by a too high NMP (methylpyrrolidone) gas concentration inside the oven chamber.

According to some embodiments of the present application, the oven module further comprises a gas concentration detection unit arranged inside the oven chamber for detecting the NMP gas concentration inside the oven chamber.

In the above solutions, the gas concentration detection unit is arranged to know about a current NMP gas concentration in the oven chamber in a timely manner, thereby reducing the safety risk caused by a too high NMP gas concentration.

According to some embodiments of the present application, the oven drying apparatus further comprises a control cabinet, the control cabinet comprises a cabinet and the plurality of control units, and the plurality of control units are arranged inside the cabinet.

In the above solutions, each of the control units is configured to control the outlet air parameter of each blowing apparatus, so that the material strip can be fully oven dried to ensure the quality of the material strip. The plurality of control units are arranged inside the cabinet, which can prevent foreign pollutants from affecting the control units, and ensure independent control of corresponding blowing apparatuses.

According to some embodiments of the present application, the control cabinet further comprises a control panel connected to the plurality of control units.

In the above solutions, by arranging a control template, each of the control units can be operated on the control template, so that different outlet air parameters of the oven modules at different positions of the oven can be adjusted for different states of the material strip, to ensure the oven drying effect of the material strip.

In a second aspect, the present application further provides an electrode plate manufacturing device, comprising: a coating apparatus configured to coat a slurry on a surface of an electrode plate; and the oven drying apparatus according to any one embodiment in the first aspect, wherein the oven of the oven drying apparatus is arranged downstream of the coating apparatus along a moving direction of the electrode plate for oven drying the slurry on the electrode plate.

In the above solutions, the slurry is coated on the surface of the electrode plate through the coating apparatus, and the electrode plate is oven dried through the oven drying apparatus provided above, so that the slurry is effectively dried to become an active material layer, and so that the electrode plate has high quality, thereby improving quality of a battery with the electrode plate.

The above description merely provides an overview of the technical solutions of the present application. In order to more clearly understand the technical means of the present application, the present application may be implemented based on the contents of the specification, and in order to make the above and other objectives, features, and advantages of the present application more obvious and understandable, detailed description of the present application is listed below.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic diagram of an oven in some embodiments of the present application;
FIG. 2 is an internal schematic diagram of an oven module in some embodiments of the present application;
FIG. 3 is a schematic diagram of an oven chamber and a blowing apparatus in some embodiments of the present application;
FIG. 4 is a block diagram of a control unit and an oven module in some embodiments of the present application; and
FIG. 5 is a schematic diagram of a blowing apparatus and a bypass roller in some embodiments of the present application.

Icons: 100-oven; 10-oven module; 11-oven chamber; 110-air return port; 12-blowing apparatus; 120-fan; 121-compartment; 122-air nozzle; 123-heating assembly; 124-temperature control unit; 125-air inlet pipe; 126-frequency converter; 13-temperature sensor; 14-bypass roller; 14a-bypass roller opposite to air nozzle; 15-gas concentration detection unit; 200-control unit; 300-control panel.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists, both A and B exist, and B exists. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may comprise, e.g., a lithium-ion secondary battery, a lithium-ion primary battery, a lithium-sulfur battery, or a sodium/lithium-ion battery, a sodium-ion battery, or a magnesium-ion battery, which is not limited in the embodiments of the present application.

The battery mentioned in the embodiments of the present application refers to a single physical module including one or more battery cells to provide higher voltage and capacity.

A core component of the battery capable of achieving repeated charging and discharging functions is the electrode assembly in the battery cell. The electrode assembly comprises an electrode plate and a separator. The electrode plate comprises a positive electrode plate and a negative electrode plate. The separator is usually arranged between the positive electrode plate and the negative electrode plate to insulate the positive electrode plate and the negative electrode plate from each other. The material of the separator may be, e.g., PP (polypropylene) or PE (polyethylene). The battery cell works mainly relying on movement of metal ions between the positive electrode plate and the negative electrode plate. The electrode plate comprises a current collector and an active material layer. The current collector has a coated region coated with the active material layer and an uncoated region having not coated with the active material layer along a width direction of the electrode plate. A tab is cut on the current collector having not coated with the active material layer, to charge and discharge the electrode assembly. The current collector may be a metal foil, such as a copper foil or an aluminum foil. The preparation process of the electrode plate includes a coating process and an oven drying process. The coating process is to uniformly coat a fully stirred slurry (i.e., a slurry-like active material) on the current collector to form a film layer, and the oven drying process is to oven dry the film layer, so that a wet film layer is dried to become a dry film layer to form the active material layer.

At present, from the development of the market situation, electric vehicles have become an important part of the sustainable development of the automobile industry. Batteries provide energy for the driving of the vehicle bodies and the operation of various electrical components in the vehicle bodies. For the electric vehicles, the battery technology is another important factor regarding their development. In the development of the battery technology, how to improve the battery quality while reducing costs is a technical problem to be urgently solved in the battery technology.

In the battery manufacturing process, quality of the electrode plate is one of the key factors affecting the battery quality. The inventors found that as the degree of drying of the slurry on the surface of the electrode plate changes, the slurry can withstand different magnitudes of the outlet air volume and/or the outlet air temperature. For example, too high outlet air temperature and/or and outlet air volume will cause the electrode plate to crack due to over-drying; while low outlet air temperature and/or outlet air volume will cause failure to thoroughly dry the electrode plate; and an integrated large oven is usually used in the existing oven drying process to oven drying the electrode plate with constant outlet air parameters (such as constant outlet air volume and/or outlet air temperature), thereby resulting in low quality of the electrode plate, and tending towards a temperature causing the electrode plate to crack or be undried. Moreover, the integrated large oven causes the difficulty in overall manufacturing and long manufacturing time, and increases the manufacturing costs of the battery.

Based on the above considerations, in order to improve the battery quality while reducing costs, the inventors have designed an oven drying apparatus through in-depth studies. The oven drying apparatus comprises an oven formed by splicing a plurality of oven modules, and a plurality of control units each corresponding to one of the oven modules. An outlet air parameter of a blowing apparatus in each of the oven modules is controlled by a corresponding control unit.

On the one hand, because the oven is formed by splicing the plurality of oven modules, the oven drying apparatus provided in this solution has the advantages of high processing efficiency and short assembly time, thereby effectively reducing the manufacturing costs of the oven drying apparatus, and reducing the manufacturing costs of the battery, compared with an integrated oven; and on the other hand, since the blowing apparatus in each of the oven modules is independently controlled by a corresponding control unit, when the material strip passes through different oven modules, air in a corresponding state can be provided to the electrode plate through the control of the control unit, which can improve the oven drying quality of the electrode plate, thereby improving the battery quality.

The oven drying apparatus disclosed in the embodiments of the present application may be used in, but not limited to, an electrode plate manufacturing device or other devices requiring material strip oven drying. The material strip mentioned in the embodiments of the present application may refer to an electrode plate, or other to-be-oven dried material strips with film layers on surfaces thereof. The following description is provided when the material strip is, for example, the electrode plate.

The technical solutions described in the embodiments of the present application are applicable to the electrode plate manufacturing device. The electrode plate manufacturing device may refer to a device for drying a current collector coated with an active material, or may refer to a device comprising a coating apparatus and an oven drying apparatus. The coating apparatus is a device capable of uniformly coating the active material on the current collector.

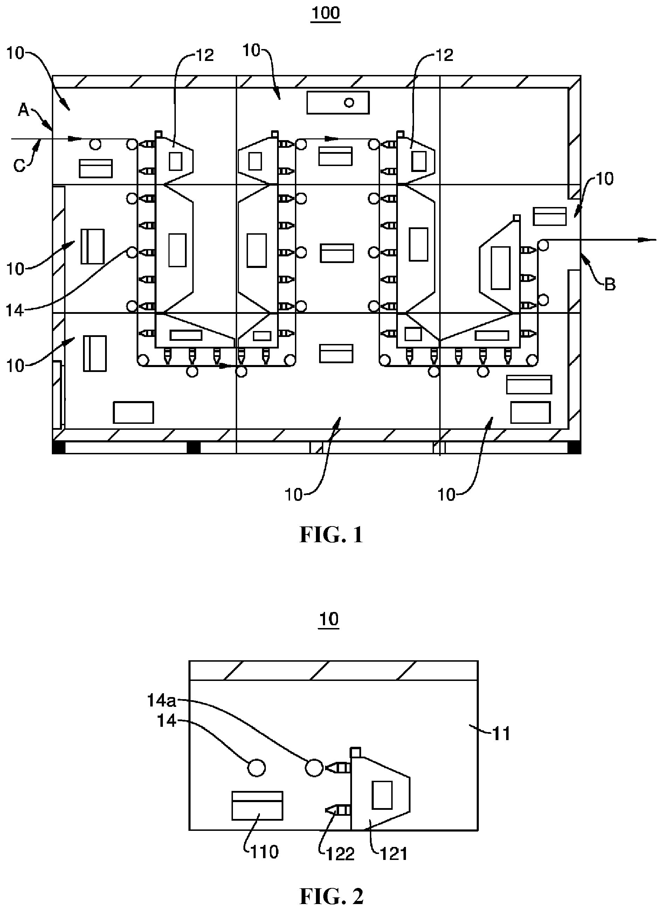

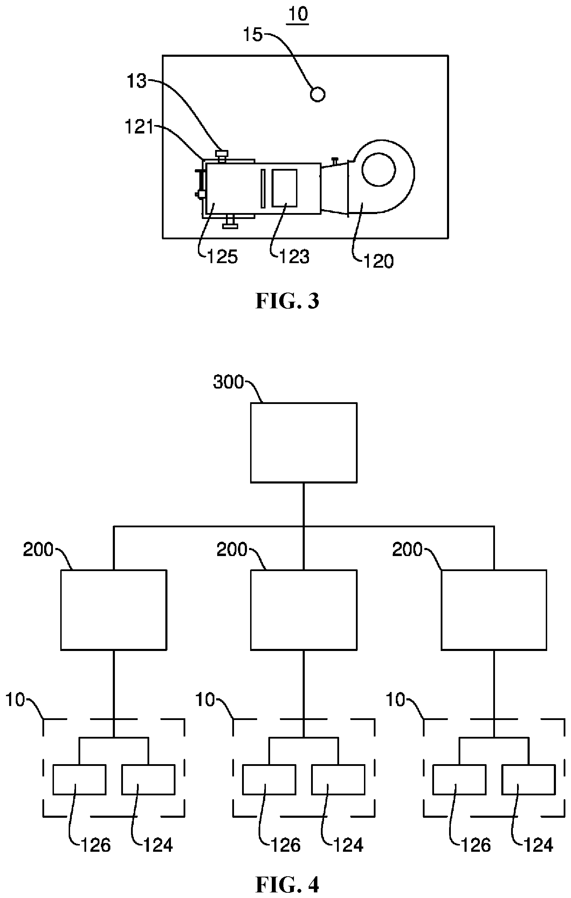

According to some embodiments of the present application, referring to FIGS. 1-4, FIG. 1 is a schematic diagram of an oven 100 in some embodiments of the present application, FIG. 2 is an internal schematic diagram of an oven module 10 in some embodiments of the present application, FIG. 3 is a schematic diagram of an oven chamber 11 and a blowing apparatus 12 in some embodiments of the present application, and FIG. 4 is a block diagram of a control unit 200 and an oven module 10 in some embodiments of the present application. In FIG. 4, three control units 200 and three oven modules 10 are plotted merely as an example, and do not impose any limitation on the number of control units 200 and oven modules 10 in the oven drying apparatus in the embodiments of the present application.

The oven drying apparatus is configured to oven dry the material strip, and the oven drying apparatus comprises an oven 100 and a plurality of control units 200. The oven 100 is formed by splicing a plurality of oven modules 10, each of the oven modules 10 comprises an oven chamber 11 and a blowing apparatus 12, the blowing apparatus 12 is at least partially arranged inside the oven chamber 11, and the blowing apparatus 12 is configured to blow air towards a material strip inside the oven chamber 11. The plurality of control units 200 each corresponds to one of the plurality of oven modules 10, and each of the control units 200 is configured to control an outlet air parameter of a blowing apparatus 12 of a corresponding oven module 10.

The oven drying apparatus is an apparatus configured to oven dry the material strip. For example, the oven drying apparatus is an apparatus capable of oven drying a slurry on an electrode plate.

The oven 100 is a main structure for oven drying the material strip. The oven 100 is a spliced structure, and is formed by splicing the plurality of oven modules 10. In some embodiments, the plurality of oven modules 10 are transported to a workshop, where the plurality of oven modules 10 are spliced to form the oven 100. When the material strip is oven dried, the material strip can enter inside the oven 100 through an inlet (indicated by "A" in FIG. 1) of the oven 100, and finally be discharged through an outlet (indicated by "B" in FIG. 1) of the oven 100. In the oven drying process, the material strip will pass through each drying module and be acted upon by each drying module to dry the material strip. In FIG. 1, the reference numeral "A" denotes the inlet of the oven 100, the reference numeral "B" denotes the outlet of the oven 100, and the reference numeral "C" denotes the material strip.

Each of the oven modules 10 has a smaller volume, and the plurality of oven modules 10 are spliced with each other to form a component of the oven 100 with a larger volume. The oven module 10 comprises an oven chamber 11 and a blowing apparatus 12, the oven chamber 11 is a structure that bears the blowing apparatus 12, oven chambers 11 of the plurality of oven modules 10 are spliced with each other through sealing members (such as flanges) to form the oven 100. The blowing apparatus 12 is arranged inside the oven chamber 11, and is capable of blowing air towards the material strip inside the oven chamber 11. Referring to FIG. 1, eight oven modules 10 are spliced with each other. The eight ovens 100 jointly form a channel for belt conveying of the material strip. During the belt conveying through the channel, the material strip is oven dried because of being acted upon by the blowing apparatus 12 in each of the oven modules 10. In FIG. 1, to make the appearance of the oven 100 regular, forming a square outer contour of the oven 100, an additional oven chamber 11 without a blowing apparatus 12 is provided, and is spliced with the eight oven modules 10 together.

"The blowing apparatus 12 being at least partially arranged inside the oven chamber 11" may mean that a part or all of the blowing apparatus 12 may be located inside the oven chamber 11, to provide air to the material strip inside the oven chamber 11. In some embodiments, a part of the blowing apparatus 12 may be located inside the oven chamber 11, and a part of the blowing apparatus may be located outside the oven chamber 11.

Each of the control units 200 is a component capable of controlling an outlet air parameter of the blowing apparatus 12. In some embodiments, the control unit 200 may be a PLC (Programmable Logic Controller) capable of controlling the blowing apparatus 12. The number of control units 200 is consistent with the number of drying modules. Each control unit 200 controls a working state of the blowing apparatus 12 in a corresponding drying module, to adjust the outlet air parameter of the blowing apparatus 12. Different outlet air parameters mean different states of air provided to the material strip and different oven drying effects of the material strip.

Since each oven module 10 corresponds to a different position of the material strip in the oven 100, that is, a position corresponding to a different state of the material strip. Therefore, the blowing apparatus 12 in each oven module 10 is independently controlled by a corresponding control unit 200, to provide air in different states to the current material strip in the oven chamber 11 in a targeted manner, and achieve an oven drying effect suitable for a current state of the material strip.

In the above solutions, the oven 100 in the oven drying apparatus is formed by splicing the plurality of oven modules 10, an outlet air parameter of each of the oven modules 10 is controlled by a respective corresponding control unit 200 respectively, so that when the material strip passes through different oven modules 10, different oven drying effects on the material strip can be achieved for the current state of the material strip, thereby ensuring that the electrode plate is thoroughly dried and will not crack due to over-drying. Therefore, compared with an integrated oven 100, on the one hand, because the oven 100 is formed by splicing the plurality of oven modules 10, the oven drying apparatus provided in this solution has high processing efficiency and short assembly time, thereby effectively reducing the manufacturing costs of the oven drying apparatus; and on the other hand, since each of the oven modules 10 is independently controlled by a corresponding control unit 200, when the material strip passes through different oven modules 10, different oven drying effects can be obtained, and the oven drying quality can be ensured, thereby improving the battery quality.

According to some embodiments of the present application, the outlet air parameter comprises an outlet air temperature and/or an outlet air volume.

In some embodiments, the control unit 200 can control the outlet air temperature and the outlet air volume provided by the blowing apparatus 12 in the oven module 10 to the material strip, to adjust the outlet air temperature and the outlet air volume in a targeted manner, and provide appropriate oven drying effects for the material strip. In some other embodiments, the control unit 200 can control the outlet air temperature provided by the blowing apparatus 12 in the oven module 10 to the material strip, to provide air at an appropriate temperature to the material strip. In some other embodiments, the control unit 200 can control the outlet air volume provided by the blowing apparatus 12 in the oven module 10 to the material strip, to provide an appropriate air volume to the material strip within a unit time.

The higher the outlet air temperature is, the faster the oven drying efficiency is, but the more easily the material strip, that is, the electrode plate, cracks due to over-drying. In some embodiments, the outlet air temperature is not higher than 150°C, to reduce the risk of the electrode plate cracking due to over-drying. The higher the outlet air volume is, the faster the oven drying efficiency is, but the more easily the material strip, that is, the electrode plate, cracks due to over-drying. In some embodiments, the outlet air volume is not higher than 600 m3/h.

In the above solutions, the blowing apparatus 12 can be controlled by the corresponding control unit 200, to adjust the outlet air volume, or the outlet air temperature, or the outlet air volume and the outlet air temperature of air provided to the material strip, thus providing different oven drying effects on the material strip in different states, ensuring that the material strip is oven dried appropriately, and preventing the material strip from cracking due to over-oven drying.

In some other embodiments, the outlet air parameter may further include, e.g., air speed or air humidity, wherein the air speed refers to a speed of air blowing towards the material strip, and the higher the air speed is, the faster the material strip is dried, but the more easily the material strip is damaged by air; and the air humidity refers to a physical quantity of an amount of water vapor contained in air, and the lower the air humidity is, the more easily the material strip is dried.

According to some embodiments of the present application, referring to FIGS. 2 and 3, the blowing apparatus 12 comprises a fan 120, a compartment 121, and an air nozzle 122. The fan 120 is communicated with the compartment 121 to supply air into the compartment 121. The air nozzle 122 is installed on the compartment 121. The air nozzle 122 is configured to blow air towards the material strip.

The fan 120 is a machine that increases the gas pressure and discharges the gas through mechanical energy. The compartment 121 may be a component connecting the fan 120 and the air nozzle 122. The compartment 121 is a hollow structure. The compartment 121 is configured to accommodate the gas, that is, air, transported by the fan 120 thereinside. The air nozzle 122 may be a component with an opening facing the material strip to discharge the gas inside the compartment 121 towards the material strip and provide air for the material strip. The air supplied by the fan 120 may be discharged from the compartment 121 through the air nozzle 122, and act upon the surface of the material strip inside the oven chamber 11.

In some embodiments, the oven module 10 has a plurality of air nozzles 122, and the plurality of air nozzles 122 are all arranged on the compartment 121. When the fan 120 supplies air to the compartment 121, the air can be uniformly discharged through each of the air nozzles 122 to uniformly act upon the material strip.

In the above solutions, the blowing apparatus 12 has a simple structure, and is convenient for manufacturing. When the material strip in the oven chamber 11 is oven dried, the fan 120 works to supply gas into the compartment 121, and finally the gas is discharged through the air nozzle 122 and acts upon the material strip, to oven dry the material strip.

According to some embodiments of the present application, referring to FIGS. 3 and 4, the blowing apparatus 12 further comprises a heating assembly 123 and a temperature control unit 124, the heating assembly 123 is arranged in an air supply path between the fan 120 and the compartment 121, the heating assembly 123 is configured to heat air provided to the compartment 121 by the fan 120, the temperature control unit 124 is configured to control a heating temperature of the heating assembly 123, and the temperature control unit 124 is electrically connected to the control unit 200.

The heating assembly 123 is a component capable of heating the air, is arranged in the air supply path between the fan 120 and the compartment 121, and can heat the air transported into the compartment 121 by the fan 120. In some embodiments, the heating assembly 123 may be a common heating pack in the oven drying field, and its heating principle may be resistance heating. The temperature control unit 124 is a component connecting the control unit 200 and the heating assembly 123. Under the control of the control unit 200, the temperature control unit 124 can adjust heating power of the heating assembly 123 to adjust the temperature of the gas inside the compartment 121, and then can adjust the outlet air temperature. In some embodiments, the temperature control unit 124 is a temperature control meter.

In the above solutions, by arranging the heating assembly 123 on the air supply path between the fan 120 and the compartment 121, the gas supplied into the compartment 121 can be heated, so that the heated gas can uniformly act upon the surface of the material strip through the air nozzle, thus oven drying the material strip. By arranging a temperature unit, the control unit 200 can control the temperature unit to control the heating power of the heating assembly 123, thereby effectively controlling the outlet air temperature.

According to some embodiments of the present application, as shown in FIG. 3, the blowing apparatus 12 further comprises an air inlet pipe 125, the fan 120 is connected to the compartment 121 through the air inlet pipe 125, and the heating assembly 123 is arranged inside the air inlet pipe 125.

The air inlet pipe 125 is a component connecting the fan 120 and the compartment 121. One port of the air inlet pipe 125 can be connected to an air discharge end of the fan 120, and the other port of the air inlet pipe 125 can be connected to the air inlet port of the compartment 121. The fan 120 is connected to the compartment 121 through the air inlet pipe 125, so that the fan 120 can be arranged at an appropriate position of the oven chamber 11 to avoid mutual interference between the fan 120 and other structures in the oven module 10.

The heating assembly 123 is arranged inside the air inlet pipe 125, which means that the gas supplied into the compartment 121 by the fan 120 through the air inlet pipe 125 can be heated by the heating assembly 123 in the flow process.

Referring to FIG. 3, a specific position of the heating assembly 123 in the oven chamber 11 is indicated as an example in FIG. 3.

In some other embodiments, the heating assembly 123 may be further arranged on an outer wall of the air inlet pipe 125 to heat the air inlet pipe 125, thus heating the gas inside the air inlet pipe 125.

In the above solutions, by arranging the air inlet pipe 125 to connect the fan 120 and the compartment 121, the fan 120 and the compartment 121 are assembled; and by arranging the heating assembly 123 inside the air inlet pipe 125, the gas supplied into the compartment 121 by the fan 120 can be effectively heated to ensure the oven drying effect on the material strip.

According to some embodiments of the present application, the compartment 121 and the air nozzle 122 are arranged inside the oven chamber 11, and the fan 120 is arranged outside the oven chamber 11.

The fan 120 is arranged outside the oven chamber 11, which means that the fan 120 can transport the gas outside the oven chamber 11 to the compartment 121 inside the oven chamber 11.

In the above solutions, the fan 120 is arranged outside the oven chamber 11 to suck outside air into the compartment 121, which can ensure gas circulation inside the oven chamber 11, effectively discharge a harmful gas generated from oven drying inside the oven chamber 11, avoid accumulation of the harmful gas, and ensure the production safety.

According to some embodiments of the present application, referring to FIG. 4, the blowing apparatus 12 further comprises a frequency converter 126, the frequency converter 126 is connected to the fan 120, and the frequency converter 126 is electrically connected to the control unit 200.

The frequency converter 126 is connected to a motor in the fan 120, and a rotation frequency of the motor in the fan 120 can be adjusted through the control of the control unit 200. The fan 120 is a machine that drives blades of the fan 120 to rotate through rotation of the motor to realize gas discharge. A magnitude of a rotation frequency of the fan 120 affects an air supply volume of the fan 120, that is, the outlet air volume of the blowing apparatus 12. The higher the rotation frequency of the fan 120 is, the larger the outlet air volume is.

In the above solutions, by arranging the frequency converter 126, the control unit 200 can control the rotation frequency of the motor in the fan 120, thereby controlling the outlet air volume.

In some other embodiments, the rotation frequency of the motor in the fan 120 may not be adjusted by frequency conversion. As is well known to those skilled in the art, the rotation frequency of the motor may also be adjusted by voltage regulation.

According to some embodiments of the present application, as shown in FIG. 3, the oven module 10 further comprises a temperature sensor 13. The temperature sensor 13 is arranged inside the compartment 121 for detecting the temperature inside the compartment 121.

The temperature sensor 13 is a sensing element capable of detecting a gas temperature inside the compartment 121. The temperature sensor 13 can be connected to the control unit 200, and feed back a current gas temperature inside the compartment 121 to the control unit 200, that is, feed back the outlet air temperature to the control unit 200.

In the above solutions, by arranging the temperature sensor 13 in the compartment 121, the temperature of the air acting upon the material strip can be detected in a timely manner, and then the outlet air parameter of the blowing apparatus 12 can be adjusted based on requirements, to prevent the material strip from cracking and damaging due to over-drying, and ensure that the material strip is oven dried appropriately.

According to some embodiments of the present application, referring to FIGS. 1 and 2, the oven module 10 further comprises a bypass roller 14, the bypass roller 14 is arranged inside the oven chamber 11, and the bypass roller 14 is configured to transport the material strip.

The bypass roller 14 is a component that is used for belt conveying of the material strip and functions to support the material strip. In the oven 100, a bypass roller 14 in each oven module 10 jointly supports the material strip, to move the material strip from the inlet of the oven 100 to the outlet of the oven 100.

In the above solutions, by arranging the bypass roller 14, the material strip can move smoothly in the oven chamber 11 to transport the material strip.

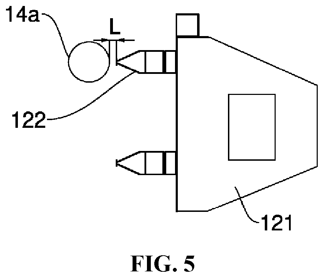

According to some embodiments of the present application, referring to FIG. 5, FIG. 5 is a schematic diagram of the blowing apparatus 12 and the bypass roller 14 in some embodiments of the present application. Each oven module 10 comprises at least one bypass roller 14a opposite to the air nozzle, and a distance between the bypass roller 14a opposite to the air nozzle and the air nozzle 122 is L, satisfying 10 mm≤L≤30 mm.

The bypass roller 14a opposite to the air nozzle means that the bypass roller 14 is arranged opposite to the air outlet of the air nozzle 122 in a direction perpendicular to a belt conveying direction of the material strip. The distance between the bypass roller 14a opposite to the air nozzle and the air nozzle 122 is L, which means that a minimum distance between the bypass roller 14 and the air nozzle 122 is L. In some embodiments, the value of L may be 10 mm, 11 mm, 12 mm, ..., 28 mm, 29 mm, or 30 mm.

In the above solutions, the bypass roller 14 is used to support the material strip to realize belt conveying of the material strip. Therefore, a gap between the bypass roller 14a opposite to the air nozzle and the air nozzle 122 can be regarded as a gap between the material strip and the air nozzle 122. The smaller the gap is, the closer the material strip is to the air nozzle 122, and the greater the effect of air is. Vice versa, the larger the gap is, the further the material strip is from the air nozzle 122, and the smaller the effect of air is. However, the closer the material strip is to the air nozzle 122, the greater the risk of damaging and cracking the material strip due to airflow impact is, while the farther the material strip is from the air nozzle 122, the lower the oven drying efficiency is. Therefore, in some embodiments of this solution, the range of the distance L between the bypass roller 14a opposite to the air nozzle and the air nozzle 122 is defined to satisfy 10 mm≤L≤30 mm, which, on the one hand, ensures the oven drying efficiency of the material strip, and on the other hand, ensures to reduce the risk of damaging the material strip due to airflow impact.

According to some embodiments of the present application, a wall of the oven chamber 11 is formed with an air return port 110.

The air return port 110 allows outside air to enter the oven chamber 11, to circulate the gas inside the oven chamber 11 and balance pressure inside and outside the oven chamber 11.

In the above solutions, the air return port 110 is formed on the wall of the oven chamber 11, to circulate the gas inside and outside the oven chamber 11, which can, in a first aspect, reduce the risk of damaging the material strip caused by heat accumulation inside the oven chamber 11; can, in a second aspect, balance the pressure inside and outside the oven chamber 11 to reduce the risk of damaging the oven chamber 11; and can, in a third aspect, reduce the risk of explosion caused by a too high NMP (methylpyrrolidone) gas concentration inside the oven chamber 11.

According to some embodiments of the present application, referring to FIG. 3, the oven module 10 further comprises a gas concentration detection unit 15 arranged inside the oven chamber 11 for detecting a NMP gas concentration inside the oven chamber 11.

In FIG. 3, the position of the gas concentration detection unit 15 is shown as an example. In some embodiments, the gas concentration detection unit 15 can detect the NMP gas concentration inside the oven chamber 11, generate a gas concentration signal, and feed the signal back to the control unit 200. The control unit 200 can adjust the outlet air parameter, such as the outlet air volume, of the blowing apparatus 12 based on the signal, to discharge the NMP gas in a timely manner.

In the above solutions, the gas concentration detection unit 15 is arranged to know about a current NMP gas concentration in the oven chamber 11 in a timely manner, thereby reducing the safety risk caused by a too high NMP gas concentration.

According to some embodiments of the present application, the oven drying apparatus further comprises a control cabinet, the control cabinet comprises a cabinet and the plurality of control units 200, and the plurality of control units 200 are arranged inside the cabinet.

The cabinet is a structure that accommodates the plurality of control units 200, and can protect the control units 200.

In the above solutions, each of the control units 200 is configured to control the outlet air parameter of each blowing apparatus 12, so that the material strip can be fully oven dried to ensure the quality of the material strip. The plurality of control units 200 are arranged inside the cabinet, which can prevent foreign pollutants from affecting the control units 200, and ensure independent control of corresponding blowing apparatuses 12.

According to some embodiments of the present application, the control cabinet further comprises a control panel 300, and the control panel 300 is connected to the plurality of control units 200.

The control panel 300 may be a component communicatively connected to all of the control units 200 for sending instructions to the control units 200 to implement human machine interaction. In some embodiments, the control panel 300 has a screen, which can display the outlet air parameter of the blowing apparatus 12; and the control panel 300 has function buttons, so that an operator can operate the function buttons to send instructions to the control units 200, thereby adjusting the outlet air parameter of the blowing apparatus 12. Moreover, in some embodiments, a control template 300 is preset with a temperature control program, which can automatically control the outlet air parameter of the blowing apparatus 12.

In the above solutions, by arranging the control template 300, each of the control units 200 can be operated on the control template 300, so that different outlet air parameters of the oven modules 10 at different positions of the oven 100 can be adjusted for different states of the material strip, to ensure the oven drying effect of the material strip.

According to some embodiments of the present application, an electrode plate manufacturing device is further provided, which comprises a coating apparatus and an oven drying apparatus. The coating apparatus is configured to coat a slurry on a surface of the electrode plate. The oven 100 of the oven drying apparatus is arranged downstream of the coating apparatus along a moving direction of the electrode plate for oven drying the slurry on the electrode plate.

In the above solutions, the slurry is coated on the surface of the electrode plate through the coating apparatus, and the electrode plate is oven dried through the oven drying apparatus provided above, so that the slurry is effectively dried to become an active material layer, and so that the electrode plate has high quality, thereby improving quality of a battery with the electrode plate.

According to some embodiments of the present application, referring to FIGS. 1-4, some embodiments of the present application provide an oven drying apparatus configured to oven dry the electrode plate. The oven drying apparatus comprises an oven 100 and a plurality of control units 200. The oven 100 comprises a plurality of oven modules 10, and the plurality of oven modules 10 are spliced with each other to form the oven 100. Each of the oven modules 10 comprises an oven chamber 11, a blowing apparatus 12, and a bypass roller 14. Two adjacent oven modules 10 are spliced using flanges and sealing therebetween is ensured. As shown in FIG. 1, after the plurality of oven modules 10 are spliced with each other, the bypass rollers 14 inside the oven modules 10 can jointly support the belt conveying of the electrode plate. By designing positions of the bypass rollers 14 of the oven modules 10, belt conveying of the electrode plate can be achieved as per the moving path as shown in FIG. 1.

The control units 200 is a PLC, and the oven modules 10 each corresponds to one of the control units 200. The control unit 200 is configured to control the blowing apparatus 12 in the corresponding oven module 10.

The blowing apparatus 12 comprises a fan 120, a compartment 121, an air nozzle 122, an air inlet pipe 125, a heating assembly 123, a temperature control unit 124, and a frequency converter 126.

The air nozzle 122 and the compartment 121 are arranged inside the oven chamber 11, and the fan 120 is located outside the oven chamber 11. The fan 120 is connected to the compartment 121 through the air inlet pipe 125, so that the fan 120 can transport outside gas to the compartment 121, and finally the gas is discharged through the air nozzle 122 to act upon the surface of the electrode plate inside the oven chamber 11. The motor of the fan 120 is connected to the control unit 200 through the frequency converter 126. Therefore, the control unit 200 can control the rotation frequency of the motor through the frequency converter 126, thereby adjusting the outlet air volume of the blowing apparatus 12.

The heating assembly 123 may be a heating pack. The heating pack is arranged inside the air inlet pipe 125. The heating pack is connected to the control unit 200 through the temperature control unit 124, thereby controlling a heating power of the heating pack to adjust the outlet air temperature of the blowing apparatus 12.

The above description merely provides preferred embodiments of the present application and are not intended to limit the present application. For those skilled in the art, the present application may have various modifications and alterations. Any modification, equivalent replacement, improvement, etc. made within the spirit and principle of the present application shall fall within the scope of protection of the present application.

## Claims

1. An oven drying apparatus for drying a material strip, comprising:
an oven formed by splicing a plurality of oven modules, wherein each of the oven modules comprises an oven chamber and a blowing apparatus, the blowing apparatus is at least partially arranged inside the oven chamber, and the blowing apparatus is configured to blow air towards the material strip inside the oven chamber; and
a plurality of control units, each corresponding to one of the plurality of oven modules, wherein each of the control units is configured to control an outlet air parameter of the blowing apparatus of the corresponding oven module.

2. The oven drying apparatus according to claim 1, wherein
the outlet air parameter comprises an outlet air temperature and/or an outlet air volume.

3. The oven drying apparatus according to claim 1 or 2, wherein
the blowing apparatus comprises a fan, a compartment, and an air nozzle, wherein the fan is in communication with the compartment to supply air into the compartment, the air nozzle is installed on the compartment, and the air nozzle is configured to blow air towards the material strip.

4. The oven drying apparatus according to claim 3, wherein
the blowing apparatus further comprises a heating assembly and a temperature control unit, the heating assembly is arranged in an air supply path between the fan and the compartment, the heating assembly is configured to heat air provided to the compartment by the fan, the temperature control unit is configured to control a heating temperature of the heating assembly, and the temperature control unit is electrically connected to the control unit.

5. The oven drying apparatus according to claim 4, wherein
the blowing apparatus further comprises an air inlet pipe, the fan is connected to the compartment through the air inlet pipe, and the heating assembly is arranged inside the air inlet pipe.

6. The oven drying apparatus according to any one of claims 3-5, wherein
the compartment and the air nozzle are arranged inside the oven chamber, and the fan is arranged outside the oven chamber.

7. The oven drying apparatus according to any one of claims 3-6, wherein
the blowing apparatus further comprises a frequency converter connected to the fan and electrically connected to the control unit.

8. The oven drying apparatus according to any one of claims 3-7, wherein
the oven module further comprises a temperature sensor arranged inside the compartment for detecting the temperature inside the compartment.

9. The oven drying apparatus according to any one of claims 3-8, wherein
the oven module further comprises a bypass roller arranged inside the oven chamber for transporting the material strip.

10. The oven drying apparatus according to any one of claims 3-8, wherein
each of the oven modules comprises at least one bypass roller opposite to the air nozzle, and a distance between the bypass roller opposite to the air nozzle and the air nozzle is L, satisfying 10 mm≤L≤30 mm.

11. The oven drying apparatus according to any one of claims 1-10, wherein
a wall of the oven chamber is formed with an air return port.

12. The oven drying apparatus according to any one of claims 1-11, wherein
the oven module further comprises a gas concentration detection unit arranged inside the oven chamber for detecting a concentration of NMP gas inside the oven chamber.

13. The oven drying apparatus according to any one of claims 1-12, wherein
the oven drying apparatus further comprises a control cabinet, the control cabinet comprises a cabinet and the plurality of control units, and the plurality of control units are arranged inside the cabinet.

14. The oven drying apparatus according to claim 13, wherein
the control cabinet further comprises a control panel connected to the plurality of control units.

15. An electrode plate manufacturing device, comprising:
a coating apparatus configured to coat a slurry on a surface of an electrode plate; and
an oven drying apparatus according to any one of claims 1-14, wherein the oven of the oven drying apparatus is arranged downstream of the coating apparatus along a moving direction of the electrode plate for drying the slurry on the electrode plate.
